(19) Europäisches Patentamt / European Patent Office / Office européen des brevets

(11) **EP 4 078 096 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(21) Anmeldenummer: **20811311.8**

(22) Anmeldetag: **20.11.2020**

(51) Internationale Patentklassifikation (IPC):
**G01F 1/34** (2006.01)   **G01F 1/74** (2006.01)
**G01F 1/84** (2006.01)

(52) Gemeinsame Patentklassifikation (CPC):
**G01F 1/8436; G01F 1/34; G01F 1/74**

(86) Internationale Anmeldenummer:
**PCT/EP2020/082924**

(87) Internationale Veröffentlichungsnummer:
**WO 2021/121868 (24.06.2021 Gazette 2021/25)**

(54) **VERFAHREN ZUM BETREIBEN EINER DURCHFLUSSMESSSTELLE FÜR MEDIEN MIT ZUMINDEST EINER FLÜSSIGEN PHASE**

METHOD FOR OPERATING A FLOW MEASURING POINT FOR MEDIA HAVING AT LEAST ONE LIQUID PHASE

PROCÉDÉ DE FONCTIONNEMENT D'UN POINT DE MESURE DE DÉBIT POUR DES MILIEUX PRÉSENTANT AU MOINS UNE PHASE LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2019 DE 102019134602**

(43) Veröffentlichungstag der Anmeldung:
**26.10.2022 Patentblatt 2022/43**

(73) Patentinhaber: **Endress + Hauser Flowtec AG**
**4153 Reinach (CH)**

(72) Erfinder: **ZHU, Hao**
**85354 Freising (DE)**

(74) Vertreter: **Hahn, Christian**
**Endress+Hauser Group Services (Deutschland)AG +Co. KG**
**Colmarer Straße 6**
**79576 Weil am Rhein (DE)**

(56) Entgegenhaltungen:
**WO-A1-00/36379**      **DE-A1-102005 046 319**
**DE-A1-102010 000 760**  **GB-A- 2 572 836**
**US-B2- 9 605 987**

EP 4 078 096 B1

**Beschreibung**

Die Erfindung betrifft ein Verfahren zum Betreiben einer Durchflussmessstelle umfassend ein Coriolis-Messgerät und ein Differenzdruckmessgerät.

Coriolis-Messgeräte zum Messen eines Durchflusses oder einer Dichte eines durch eine Rohrleitung strömenden flüssigen Mediums weisen unter gewissen Bedingungen wie beispielsweise sehr geringen Durchflussraten oder Gasblasen im Medium eine nachlassende Messgenauigkeit hinsichtlich der Durchflussmessung auf. Es hat sich als vorteilhaft erwiesen, in solchen Situationen mittels eines Differenzdruckmessgeräts einen Druckabfall des Mediums über dem Coriolis-Messgerät zu erfassen und Messwerte des Differenzdrucks für eine Durchflussmessung heranzuziehen, siehe beispielsweise die DE102005046319A1 und GB 2 572 836 A.

Bei Anwendungen, bei welchen eine Zusammensetzung des Mediums in relativ kurzer Zeit schwankt, ist eine Durchflussmessung mittels Druckdifferenzmessung jedoch auch mit störenden Unsicherheiten behaftet.

Als Aufgabe der Erfindung kann daher gesehen werden, eine Durchflussmessung unter schwierigen Bedingungen zu ermöglichen oder zu verbessern.

Die Aufgabe wird gelöst durch ein Verfahren gemäß dem unabhängigen Anspruch 1.

Bei einem erfindungsgemäßen Verfahren zum Betreiben einer Durchflussmessstelle für Medien mit zumindest einer flüssigen Phase
umfassend:

ein Coriolis-Messgerät zum Messen eines Massedurchflusses und einer Dichte eines durch eine Rohrleitung strömenden Mediums, wobei das Coriolis-Messgerät mindestens ein Messrohr mit jeweils einem Einlauf und einem Auslauf aufweist;

wobei eine Differenzdruck-Messvorrichtung eingerichtet ist zum Erfassen eines Differenzdrucks zwischen einem stromaufwärts zu einem Strömungshindernis, insbesondere dem Coriolis-Messgerät, angeordneten Strömungsbereich und einem stromabwärts zum Strömungshindernis angeordneten Strömungsbereich,

weist das Verfahren folgende Schritte auf:
Überprüfen eines Medienzustands mittels des Coriolis-Messgeräts;

- Bei Erkennen eines rein flüssigen Mediums:

Messen einer ersten Dichte des Mediums mittels des Coriolis-Messgeräts und Speichern eines Messwerts der ersten Dichte;

Messen eines ersten Massedurchflusses mittels des Coriolis-Messgeräts;

Bestimmen einer ersten Viskosität des Mediums auf Basis der ersten Dichte, des Differenzdrucks und des ersten Massedurchflusses und Speichern eines Messwerts der ersten Viskosität,

- Bei Erkennen eines gasförmigen Anteils im Medium
Bestimmen einer ersten Reynoldszahl des Mediums mittels

- der ersten Viskosität;

- der ersten Dichte und/oder einer zweiten Dichte des Mediums gemessen mittels des Coriolis-Messgeräts bei Erkennung des gasförmigen Anteils;

- eines zweiten Massedurchflusses gemessen mittels des Coriolis-Messgeräts bei Erkennung des gasförmigen Anteils,

Bestimmen eines dritten Massedurchflusses auf Basis des Differenzdrucks und der ersten Reynoldszahl.

Auf diese Weise kann eine Massedurchflussmessung basierend auf einer Differenzdruckmessung korrigiert werden, so dass auch unter schwierigen Bedingungen hinreichend genaue Messwerte erhalten werden.

Beispielsweise bei der Entnahme von Erdöl aus einem Erdölvorkommen kann der Zustand des Mediums schnell schwanken. Unter hohem Druck im Medium gelöste Gase können bei Druckminderung Gasbläschen bilden und somit Größen wie Dichte oder Viskosität des Mediums beeinflussen.

Für den Start des Verfahrens kann der Fachmann bei initialem Vorliegen eines gasförmigen Mediums beispielsweise Anfangswerte für Messwerte der ersten Dichte sowie der ersten Viskosität vorgeben, welche Anfangswerte er beispielsweise durch Abschätzen oder durch Erfahrung oder durch eine physikalische Berechnung gewinnt. Er kann die Durchflussmessstelle auch dazu veranlassen, mit dem Start des Verfahrens zu warten, bis erstmalig ein rein flüssiges Medium vorliegt.

Bei Bestimmen der ersten Reynoldszahl mittels der ersten Viskosität, der ersten Dichte, der zweiten Dichte bzw. des zweiten Massedurchflusses wird auf entsprechende Messwerte zurückgegriffen. Entsprechendes gilt auf für die Bestimmung anderer Messgrößen.

In einer Ausgestaltung werden bei Erkennung des gasförmigen Anteils folgende iterativen Verfahrensschritte durchgeführt:

Bestimmen einer zweiten Reynoldszahl mittels

- des dritten Massedurchflusses;

- der ersten Viskosität;

- der ersten Dichte und/oder der zweiten Dichte,

Speichern eines Messwerts der zweiten Reynoldszahl,

Bestimmen eines dritten Massedurchflusses auf Basis des Differenzdrucks und der zweiten Reynoldszahl und Speichern eines Messwerts des dritten Massedurchflusses.

Durch diese Iteration kann eine Messgenauigkeit weiter erhöht werden.

In einer Ausgestaltung wird die Iteration beendet, sobald ein Betrag einer Differenz aufeinanderfolgender Messwerte des dritten Massedurchflusses oder der zweiten Reynoldszahl einen Grenzwert unterschreitet, wobei der Grenzwert beispielsweise 5%, und insbesondere 2% und bevorzugt 1% eines Mittelwerts der die Differenz bildenden Messwerte oder eines der die Differenz bildenden Messwerte ist.

In einer Ausgestaltung wird der Medienzustand mittels des Coriolis-Messgeräts überprüft, wobei bei der Überprüfung eine Dämpfung von Schwingungen und/oder eine Schwankung einer Resonanzfrequenz von mindestens einem Messrohr des Coriolis-Messgeräts herangezogen wird.

In einer Ausgestaltung wird bei der Dichtemessung eine Resonanzfrequenz von mindestens einem Messrohr des Coriolis-Messgeräts herangezogen.

In einer Ausgestaltung wird bei Erkennung eines gasförmigen Anteils die Dichtemessung anhand eines physikalisch-mathematischen Modells korrigiert, wobei das Modell einen Einfluss von Gasblasen auf die Messung der Mediendichte berücksichtigt.

Die Gasblasen im Medium führen im Messrohr des Coriolis-Messgeräts abhängig unter anderem von einem Gasblasendurchmesser eine Bewegung senkrecht zu einer Messrohrinnenwand in paralleler Richtung zur Messrohrbewegung aus und beeinflussen somit Messwerte hinsichtlich Dichte und Viskosität. Das Modell berücksichtigt die Relativbewegung, somit kann der störende Einfluss der Gasblasen korrigiert werden. Weiteres dazu findet der Fachmann beispielsweise bei H. Zhu, Application of Coriolis Mass Flowmeters in Bubbly and Particulate Two-Phase Flows, Shaker, ISBN 978-3-8322-8216-5, 2009.

In einer Ausgestaltung wird bei Erkennung eines gasförmigen Anteils mittels des Coriolis-Messgeräts eine zweite Dichte des Mediums gemessen,

wobei auf Basis der ersten Dichte und der zweiten Dichte ein Verhältnis eines Volumens des gasförmigen Anteils zu flüssigem Anteil bestimmt wird,

wobei mittels des Verhältnisses ein Messwert einer Differenzdruckmessung korrigiert wird.

Mittels dieser Korrektur kann dann ein Massedurchfluss korrekt bestimmt werden.

In einer Ausgestaltung weist die Differenzdruck-Messvorrichtung einen ersten Drucksensor und einen zweiten Drucksensor aufweist, wobei der erste Drucksensor stromaufwärts zum Strömungshindernis angeordnet ist, und wobei der zweite Drucksensor stromabwärts zum Strömungshindernis angeordnet ist, und/oder wobei die Differenzdruck-Messvorrichtung einen Differenzdrucksensor aufweist, welcher einen Differenzdruck einer stromaufwärts gerichteten Seite des Strömungshindernisses und einer stromabwärts gerichteten Seite des Strömungshindernisses erfasst.

Die Differenzdruck-Messvorrichtung kann dabei Bestandteil des Durchflussmessgeräts sein oder ein eigenständiges Messgerät, welches Messwerte des Differenzdrucks an das Durchflussmessgerät übermittelt.

In einer Ausgestaltung stellt eine elektronische Mess-/Betriebsschaltung des Coriolis-Messgeräts Messwerte des Massedurchflusses bereit und gibt diese aus,

wobei bei Erkennung eines rein flüssigen Mediums mittels des Coriolis-Messgeräts erfasste Messwerte des ersten Massedurchflusses ausgegeben werden,

und wobei bei Erkennung eines gasförmigen Anteils im Medium mittels des Differenzdrucks erfasste Messwerte des dritten Massedurchflusses ausgegeben werden.

In einer Ausgestaltung wird ein Einfluss eines statischen Differenzdrucks auf Messwerte des Differenzdrucks korrigiert.

In einer Ausgestaltung wird falls ein Absolutwert des Differenzdrucks einen Grenzwert unterschreitet, ein Massedurchfluss bestimmt mittels des Differenzdrucks auf einen Wert Null gesetzt, wobei der Grenzwert beispielsweise 20 mbar, und insbesondere 10 mbar und bevorzugt 5 mbar ist.

Im Folgenden wird die Erfindung anhand von Ausführungsbeispielen beschrieben.

Fig. 1 skizziert eine beispielhafte Durchflussmessstelle mit einem Coriolis-Messgerät sowie einem Differenzdruckmessgerät;

Fig. 2 skizziert ein beispielhaftes Coriolis-Messgerät;

Fig. 3 skizziert den Ablauf eines beispielhaften erfindungsgemäßen Verfahrens.

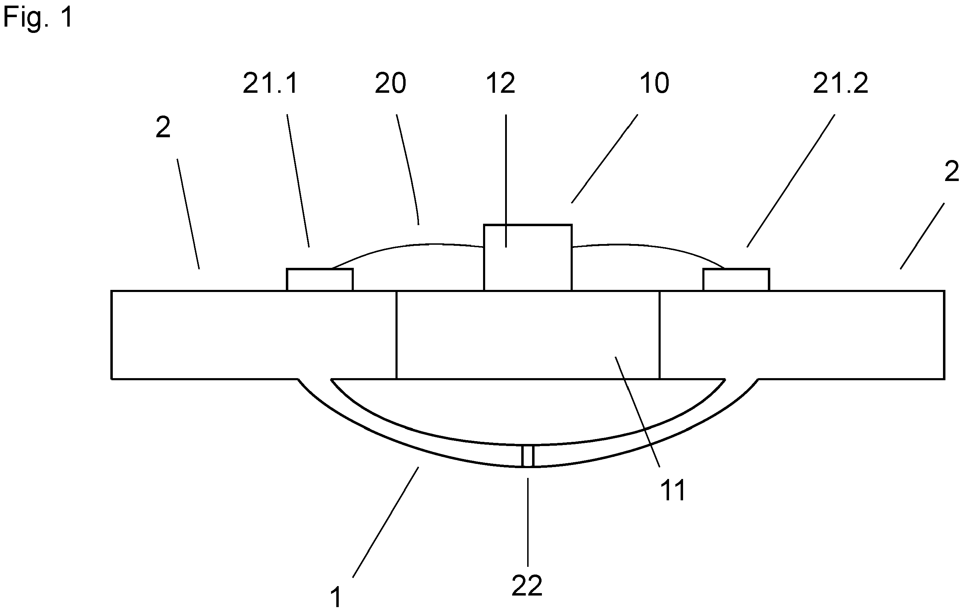

Fig. 1 skizziert eine beispielhafte Durchflussmessstelle 1 umfassend eine medienführende Rohrleitung 2 und ein in der Rohrleitung angeordnetes Coriolis-Messgerät 10 zum Erfassen eines Massedurchflusses sowie einer Dichte des durch die Rohrleitung strömenden Mediums. Des Weiteren weist die Durchflussmessstelle eine Differenzdruck-Messvorrichtung auf, welche dazu eingerichtet ist, einen Differenzdrucks zwischen einem stromaufwärts zum Coriolis-Messgerät angeordneten Strömungsbereich 3.1 und einem stromabwärts zum Coriolis-Messgerät angeordneten Strömungsbereich 3.2 zu erfassen. Alternativ kann auch ein Differenzdruck über einem anderen Strömungshindernis gemessen werden.

Die Differenzdruck-Messvorrichtung kann wie hier dargestellt stromaufwärts zum Coriolis-Messgerät einen ersten Drucksensor 21.1 und stromabwärts zum Coriolis-Messgerät einen zweiten Drucksensor 21.2 aufweisen. Eine Differenz zwischen Messwerten der Drucksensoren wird als Maß für einen Differenzdruck über dem Coriolis-Messgerät herangezogen. Alternativ oder zusätzlich kann wie hier gezeigt die Differenzdruck-Messvorrichtung einen Differenzdrucksensor 22 aufweisen, welcher in einen Bypasskanal eingesetzt ist und diesen dicht in einen ersten Abschnitt und in einen zweiten Abschnitt trennt. Eine Druckdifferenz kann beispielsweise durch eine Auslenkung einer Membran des Differenzdrucksensors 22 erkannt werden.

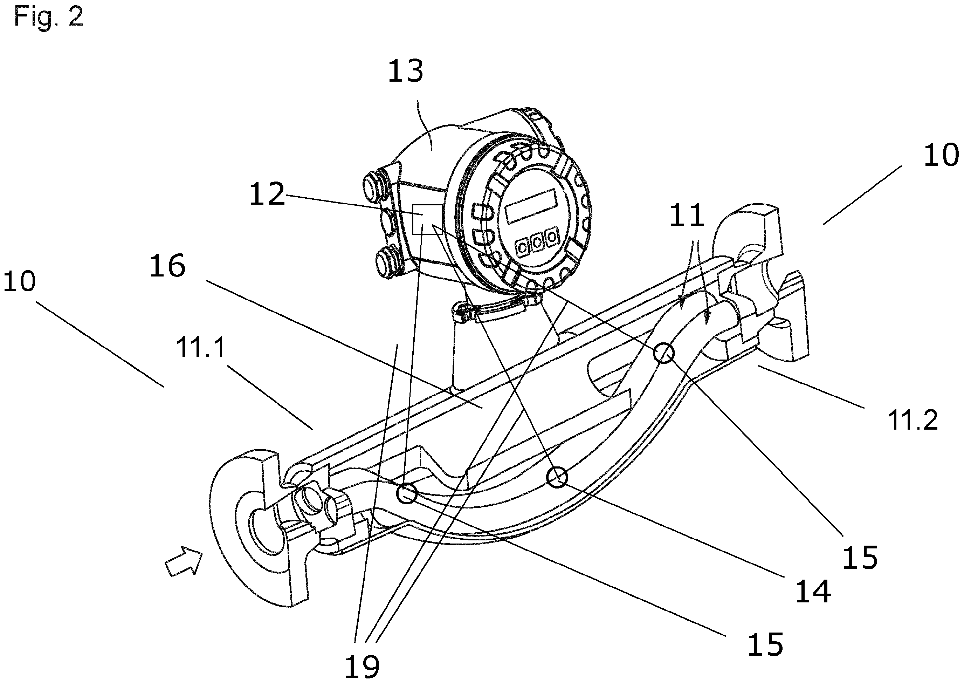

Die Differenzdruck-Messvorrichtung kann wie hier dargestellt Teil des Coriolis-Messgeräts sein, wobei Messsignale der Drucksensoren bzw. des Differenzdrucksensors an eine elektronische Mess-/Betriebsschaltung des Coriolis-Messgeräts 10 übermittelt werden, siehe dazu auch Fig. 2. Die Messsignale werden dann von der elektronischen Mess-/Betriebsschaltung verarbeitet, welche darauf basierend Messwerte des Differenzdrucks erstellt und bereitstellt. Alternativ kann die Differenzdruck-Messvorrichtung auch ein separates Messgerät sein und dazu eingerichtet sein, dem Coriolis-Messgerät Messwerte für den Differenzdruck zu übermitteln.

Fig. 2 zeigt ein Coriolis-Messgerät 1 mit einem Messaufnehmer 10, einer elektronischen Mess-/Betriebsschaltung 20 und einem Gehäuse 30 zum Behausen der elektronischen Mess-/Betriebsschaltung.

Der Messaufnehmer weist zwei Messrohre 11 mit jeweils einem Einlauf 11.1 und einem Auslauf 11.2 auf, welche von einem Trägerkörper 16 gehalten werden. Die Messrohre sind dabei dazu eingerichtet, gegeneinander zu schwingen. Die hier gezeigte Messrohranzahl ist beispielhaft, der Messaufnehmer kann beispielsweise auch nur ein Messrohr oder vier Messrohre aufweisen, welche insbesondere in zwei Messrohrpaaren angeordnet sind, wobei die Messrohre eines Paars dazu eingerichtet sind, gegeneinander zu schwingen. Der Messaufnehmer weist einen Erreger 14 auf, welcher dazu eingerichtet ist, die Messrohre zum Schwingen anzuregen. Der Messaufnehmer weist zwei Sensoren 15 auf, welche dazu eingerichtet sind, die Messrohrschwingungen zu erfassen. Ein durch die Messrohre strömendes Medium beeinflusst die Messrohrschwingungen in charakteristischer Art und Weise, so dass aus den Messsignalen der Sensoren ein Massedurchfluss und/oder eine Dichte des Mediums und/oder eine Viskosität des Mediums herleitbar ist.

Coriolis-Messgeräte funktionieren sehr gut bei rein flüssigen Medien, welche gegebenenfalls mehrere unterschiedliche Bestandteile mit sich führen, wie beispielsweise ein Öl-Wasser-Gemisch.

Bei speziellen Anwendungen wie beispielsweise bei Entnahme von Erdöl aus einem Erdölvorkommen kann das Medium unter anderem einen gasförmigen Anteil in Form von Gasblasen mitführen, welche eine Durchflussmessung mittels des Coriolis-Messgeräts stark erschweren. Aus dem Stand der Technik ist es bekannt, in solchen Fällen einen Differenzdruck, welcher über dem Coriolis-Messgerät abfällt, als ein Maß für einen Massedurchfluss heranzuziehen. Dabei wird mittels des Coriolis-Messgeräts während Vorliegen eines rein flüssigen Mediums eine Dichte oder eine Viskosität des Mediums bestimmt, und bei Vorliegen eines gasförmigen Anteils mittels des Differenzdrucks und der Dichte bzw. der Viskosität ein Strömungsparameter bestimmt.

Jedoch ist eine Bestimmung der Dichte bzw. der Viskosität bei Vorliegen eines gasförmigen Anteils oftmals nicht ausreichend genau.

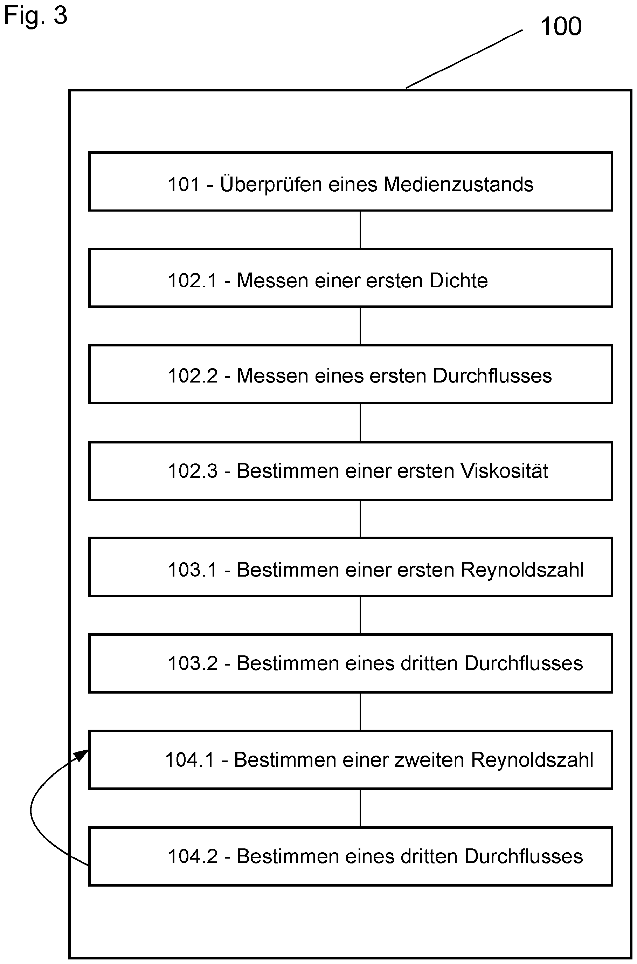

Fig. 3 beschreibt daher ein beispielhaftes erfindungsgemäßes Verfahren, mittels welchem bei einer Durchflussmessstelle auch bei Vorliegen eines gasförmigen Anteils im Medium eine hohe Messgenauigkeit erreicht werden kann.

Das Verfahren weist dabei folgende Schritte auf:

Überprüfen eines Medienzustands mittels des Coriolis-Messgeräts in einem ersten Verfahrensschritt 101;

- Bei Erkennen eines rein flüssigen Mediums:

  Messen einer ersten Dichte des Mediums mittels des Coriolis-Messgeräts und Speichern eines Messwerts der ersten Dichte in einem folgenden Verfahrensschritt 102.1;

  Messen eines ersten Massedurchflusses mittels des Coriolis-Messgeräts in einem folgenden Verfahrensschritt 102.2;

  Bestimmen einer ersten Viskosität des Mediums auf Basis der ersten Dichte, des Differenzdrucks und des ersten Massedurchflusses und Speichern eines Messwerts der ersten Viskosität 102.3 in einem folgenden Verfahrensschritt;

- Bei Erkennen eines gasförmigen Anteils im Medium

  Bestimmen einer ersten Reynoldszahl des Mediums in einem folgenden Verfahrensschritt 103.1 mittels

  - der ersten Viskosität;

- der ersten Dichte und/oder einer zweiten Dichte des Mediums gemessen mittels des Coriolis-Messgeräts bei Erkennung des gasförmigen Anteils;

- eines zweiten Massedurchflusses gemessen mittels des Coriolis-Messgeräts bei Erkennung des gasförmigen Anteils,

und Bestimmen eines dritten Massedurchflusses auf Basis des Differenzdrucks und der ersten Reynoldszahl in einem folgenden Verfahrensschritt 103.2.

Bei Vorliegen eines gasförmigen Anteils im Medium kann über die Bestimmung des dritten Massedurchflusses mittels der ersten Reynoldszahl und des Differenzdrucks ein tatsächlicher Massedurchfluss besser abgeschätzt werden.

Die Reynoldszahl des Mediums wirkt sich auf ein Strömungsprofil des Mediums im Messrohr des Coriolis-Messgeräts aus. Ein gasförmiger Anteil in Form von Gasblasen wirkt sich auf die Reynoldszahl und somit auf das Strömungsprofil aus und muss daher bei Bestimmung des dritten Massedurchflusses berücksichtigt werden. Eine Beziehung zwischen den Größen Reynoldszahl Re, Strömungsgeschwindigkeit v, Dichte des Mediums $\rho$ und erste Viskosität $\eta$ (eine dynamische Viskosität) ist gegeben durch:

$$Re = \frac{\rho * v * d}{\eta}$$ mit d als Durchmesser des Messrohrs.

Es ist dabei von großem Vorteil, wenn die erste Viskosität nicht mittels des Coriolis-Messgeräts, sondern erfindungsgemäß mittels des Differenzdrucks bestimmt wird. Bereits ein sehr geringer gasförmiger Anteil in Form von kleinen Gasbläschen kann zu einer nennenswerten Beeinflussung einer Viskositätsmessung per Coriolis-Messgerät führen, ohne dass das Vorliegen des sehr geringen gasförmigen Anteils erkannt wird. In diesem Fall wäre eine Massedurchflussmessung mittels Differenzdruck stark verfälscht.

Bei der Überprüfung des Medienzustands mittels des Coriolis-Messgeräts wird beispielsweise eine Dämpfung von Schwingungen und/oder eine Schwankung einer Resonanzfrequenz von mindestens einem Messrohr 11 des Coriolis-Messgeräts herangezogen. Beispielsweise kann zur Unterscheidung zwischen rein flüssigem Medium und Medium mit Gasblasen ein Grenzwert einer per Schwingungsdämpfung gemessenen Viskosität herangezogen werden. Eine Viskosität einer Flüssigkeit weist üblicherweise einen Wert innerhalb eines bestimmten Wertebereichs auf. Bei Messwerten außerhalb des Wertebereichs kann daher ein Vorliegen von Gasblasen erkannt werden.

Zwecks Verbesserung der Messgenauigkeit des Massedurchflusses können bei Erkennung eines gasförmigen Anteils folgende iterative Verfahrensschritte durchgeführt werden:

Bestimmen einer zweiten Reynoldszahl 104.1 mittels

- des dritten Massedurchflusses;

- der ersten Viskosität;

- der ersten Dichte und/oder der zweiten Dichte,

und Speichern eines Messwerts der zweiten Reynoldszahl,

Bestimmen eines dritten Massedurchflusses 104.2 auf Basis des Differenzdrucks und der zweiten Reynoldszahl und Speichern eines Messwerts des dritten Massedurchflusses.

Wiederholen der beiden Verfahrensschritte führt zu einer Konvergenz von Iterationswerten des dritten Massedurchflusses.

Die Iteration kann beispielsweise beendet werden, sobald ein Betrag einer Differenz aufeinanderfolgender Messwerte des dritten Massedurchflusses oder der zweiten Reynoldszahl einen Grenzwert unterschreitet, wobei der Grenzwert beispielsweise 5%, und insbesondere 2%, und bevorzugt 1% eines Mittelwerts der die Differenz bildenden Messwerte oder eines der die Differenz bildenden Messwerte ist,

oder die Iteration kann beispielsweise beendet werden, wenn eine maximale Zeitdauer abgelaufen ist, wobei die maximale Zeitdauer beispielsweise durch einen Zeitabstand zwischen zwei Messwerten des Massedurchflusses begrenzt ist.

Zwecks Verbesserung der Messgenauigkeit kann ein Einfluss eines statischen Differenzdrucks auf Messwerte des Differenzdrucks korrigiert werden. Bei Kenntnis einer Einbausituation des Coriolis-Messgeräts sowie des Druckdifferenz-Messgeräts in der Rohrleitung, insbesondere bei Kenntnis einer Inklination gegenüber einer Waagerechten kann mittels Mediendichte und beispielsweise einem Abstand der Drucksensoren ein statischer Differenzdruck berechnet und bei der Bestimmung von Messwerten des dritten Massedurchflusses berücksichtigt werden.

Falls ein Absolutwert des Differenzdrucks gegebenenfalls bereinigt um den statischen Differenzdruck einen Grenzwert unterschreitet, kann ein Massedurchfluss bestimmt mittels des Differenzdrucks auf einen Wert Null gesetzt werden, wobei der Grenzwert beispielsweise 20 mbar, und insbesondere 10 mbar und bevorzugt 5 mbar ist. Auf diese Weise kann vermieden werden, dass ein festgestellter Differenzdruck in der Größenordnung einer Messunsicherheit als ein Massedurchfluss gewertet wird.

Die elektronische Mess-/Betriebsschaltung 12 des Coriolis-Messgeräts stellt dabei Messwerte des Massedurchflusses bereit und gibt diese aus, wobei bei Erkennung eines rein flüssigen Mediums mittels des Coriolis-Messgeräts erfasste Messwerte des ersten Massedurchflusses ausgegeben werden, und wobei bei Erkennung eines gasförmigen Anteils im Medium mittels des Differenzdrucks erfasste Messwerte des dritten Massedurchflusses ausgegeben werden.

**Bezugszeichenliste**

| 1 | Durchflussmessstelle |
|---|---|
| 2 | Rohrleitung |
| 3.1 | stromaufwärts angeordneter Strömungsbereich |
| 3.2 | stromabwärts angeordneter Strömungsbereich |
| 10 | Coriolis-Messgerät |
| 11 | Messrohr |
| 11.1 | Einlauf |
| 11.2 | Auslauf |
| 12 | elektronische Mess-/Betriebsschaltung |
| 13 | Gehäuse |
| 14 | Erreger |
| 15 | Sensor |
| 16 | Trägerkörper |
| 19 | elektrische Verbindungsleitung |
| 20 | Differenzdruck-Messvorrichtung |
| 21.1 | erster Drucksensor |
| 21.2 | zweiter Drucksensor |
| 22 | Differenzdrucksensor |
| 100 | Verfahren |
| 101 | Überprüfen eines Medienzustands |
| 102.1 | Messen einer ersten Dichte |
| 102.2 | Messen eines ersten Massedurchflusses |
| 102.3 | Bestimmen einer ersten Viskosität |
| 103.1 | Bestimmen einer ersten Reynoldszahl |
| 103.2 | Bestimmen eines dritten Massedurchflusses |
| 104.1 | Bestimmen einer zweiten Reynoldszahl |
| 104.2 | Bestimmen eines dritten Massedurchflusses |

**Patentansprüche**

1. Verfahren (100) zum Betreiben einer Durchflussmessstelle (1) für Medien mit zumindest einer flüssigen Phase umfassend:

   ein Coriolis-Messgerät (10) zum Messen eines Massedurchflusses und einer Dichte eines durch eine Rohrleitung (2) strömenden Mediums, wobei das Coriolis-Messgerät mindestens ein Messrohr (11) mit jeweils einem Einlauf (11.1) und einem Auslauf (11.2) aufweist;
   wobei eine Differenzdruck-Messvorrichtung (20) eingerichtet ist zum Erfassen eines Differenzdrucks zwischen einem stromaufwärts zu einem Strömungshindernis, insbesondere dem Coriolis-Messgerät, angeordneten Strömungsbereich (3.1) und einem stromabwärts zum Strömungshindernis angeordneten Strömungsbereich (3.2),
   wobei das Verfahren folgende Schritte aufweist:
   Überprüfen eines Medienzustands mittels des Coriolis-Messgeräts (101);

   - Bei Erkennen eines rein flüssigen Mediums:

     Messen einer ersten Dichte des Mediums mittels des Coriolis-Messgeräts und Speichern eines Messwerts der ersten Dichte (102.1);
     Messen eines ersten Massedurchflusses mittels des Coriolis-Messgeräts (102.2);
     Bestimmen einer ersten Viskosität des Mediums auf Basis der ersten Dichte, des Differenzdrucks und des ersten Massedurchflusses und Speichern eines Messwerts der ersten Viskosität (102.3),

   - Bei Erkennen eines gasförmigen Anteils im Medium

     Bestimmen einer ersten Reynoldszahl des Mediums (103.1) mittels

       - der ersten Viskosität;
       - der ersten Dichte und/oder einer zweiten Dichte des Mediums gemessen mittels des Coriolis-Messgeräts bei Erkennung des gasförmigen Anteils;
       - eines zweiten Massedurchflusses gemessen mittels des Coriolis-Messgeräts bei Erkennung des gasförmigen Anteils,

     Bestimmen eines dritten Massedurchflusses auf Basis des Differenzdrucks und der ersten Reynoldszahl (103.2).

2. Verfahren nach Anspruch 1,
   wobei bei Erkennung des gasförmigen Anteils folgende iterativen Verfahrensschritte durchgeführt werden:

   Bestimmen einer zweiten Reynoldszahl (104.1) mittels

     - des dritten Massedurchflusses;
     - der ersten Viskosität;
     - der ersten Dichte und/oder der zweiten Dichte,

und Speichern eines Messwerts der zweiten Reynoldszahl,

Bestimmen eines dritten Massedurchflusses (104.2) auf Basis des Differenzdrucks und der zweiten Reynoldszahl und Speichern eines Messwerts des dritten Massedurchflusses.

3. Verfahren nach Anspruch 2,

wobei die Iteration beendet wird, sobald ein Betrag einer Differenz aufeinanderfolgender Messwerte des dritten Massedurchflusses oder der zweiten Reynoldszahl einen Grenzwert unterschreitet,

wobei der Grenzwert beispielsweise 5%, und insbesondere 2% und bevorzugt 1% eines Mittelwerts der die Differenz bildenden Messwerte oder eines der die Differenz bildenden Messwerte ist.

4. Verfahren nach einem der vorigen Ansprüche, wobei der Medienzustand mittels des Coriolis-Messgeräts (10) überprüft wird, wobei bei der Überprüfung eine Dämpfung von Schwingungen und/oder eine Schwankung einer Resonanzfrequenz von mindestens einem Messrohr (11) des Coriolis-Messgeräts herangezogen wird.

5. Verfahren nach einem der vorigen Ansprüche, wobei bei der Dichtemessung eine Resonanzfrequenz von mindestens einem Messrohr (11) des Coriolis-Messgeräts (10) herangezogen wird.

6. Verfahren nach Anspruch 5,

wobei bei Erkennung eines gasförmigen Anteils die Bestimmung der zweiten Mediendichte anhand eines physikalisch-mathematischen Modells korrigiert wird,

wobei das Modell eine Bewegung von Gasblasen relativ zu einer Messrohrwandung in einer Messrohrschwingungsrichtung berücksichtigt.

7. Verfahren nach einem der vorigen Ansprüche,

wobei bei Erkennung eines gasförmigen Anteils mittels des Coriolis-Messgeräts (10) eine zweite Dichte des Mediums gemessen wird,

wobei auf Basis der ersten Dichte und der zweiten Dichte ein Verhältnis eines Volumens des gasförmigen Anteils zu flüssigem Anteil bestimmt wird,

wobei mittels des Verhältnisses ein Messwert einer Differenzdruckmessung korrigiert wird.

8. Verfahren nach einem der vorigen Ansprüche,

wobei die Differenzdruck-Messvorrichtung (20) einen ersten Drucksensor (21.1) und einen zweiten Drucksensor (21.1) aufweist, wobei der erste Drucksensor stromaufwärts zum Strömungshindernis angeordnet ist, und wobei der zweite Drucksensor stromabwärts zum Strömungshindernis angeordnet ist,

und/oder wobei die Differenzdruck-Messvorrichtung einen Differenzdrucksensor (22) aufweist, welcher einen Differenzdruck einer stromaufwärts gerichteten Seite des Strömungshindernisses und einer stromabwärts gerichteten Seite des Strömungshindernisses erfasst.

9. Verfahren nach einem der vorigen Ansprüche,

wobei eine elektronische Mess-/Betriebsschaltung (12) des Coriolis-Messgeräts Messwerte des Massedurchflusses bereitstellt und ausgibt, wobei bei Erkennung eines rein flüssigen Mediums mittels des Coriolis-Messgeräts erfasste Messwerte des ersten Massedurchflusses ausgegeben werden,

und wobei bei Erkennung eines gasförmigen Anteils im Medium mittels des Differenzdrucks erfasste Messwerte des dritten Massedurchflusses ausgegeben werden,

wobei die elektronische Mess-/Betriebsschaltung insbesondere in einem Gehäuse (13) des Coriolis-Messgeräts angeordnet ist.

10. Verfahren nach einem der vorigen Ansprüche, wobei ein Einfluss eines statischen Differenzdrucks auf Messwerte des Differenzdrucks korrigiert wird.

11. Verfahren nach einem der vorigen Ansprüche, wobei falls ein Absolutwert des Differenzdrucks einen Grenzwert unterschreitet, ein Massedurchfluss bestimmt mittels des Differenzdrucks auf einen Wert Null gesetzt wird, wobei der Grenzwert beispielsweise 20 mbar, und insbesondere 10 mbar und bevorzugt 5 mbar ist.

Claims

1. A method (100) for operating a flow measuring point (1) for media with at least one liquid phase, comprising:

A Coriolis measuring device (10) for measuring a mass flow and a density of a medium flowing through a pipeline (2), wherein the Coriolis measuring device has at least one measuring tube (11) with an inlet (11.1) and an outlet (11.2); wherein a differential pressure measuring device (20) is configured to measure a differential pressure between a flow area (3.1) arranged upstream of an object that is obstructing the flow, in particular the Coriolis measuring device, and a flow area (3.2) arranged downstream of an object that is obstructing the flow, wherein the method comprises the following steps:
Checking a media state using the Coriolis measuring device (101);

- If a purely liquid medium is detected:

Measuring a first density of the medium using the Coriolis measuring device and saving a measured value for the first density (102.1);
Measuring a first mass flow using the Coriolis measuring device (102.2);
Determining a first viscosity of the medium based on the first density, the differential pressure, and the first mass flow, and saving a measured value for the first viscosity (102.3),

- If a gaseous component is detected in the medium:
Determining a first Reynolds number of the medium (103.1) using

- the first viscosity;
- the first density and/or a second density of the medium measured using the Coriolis measuring device if the gaseous component is detected;

- a second mass flow measured using the Coriolis measuring device if the gaseous component is detected,
Determining a third mass flow based on the differential pressure and the first Reynolds number (103.2).

2. The method as claimed in claim 1,
wherein the following iterative process steps are carried out if the gaseous component is detected:

Determining a second Reynolds number (104.1) using

- the third mass flow;
- the first viscosity;
- the first density and/or the second density,

and saving a measured value for the second Reynolds number,
Determining a third mass flow (104.2) based on the differential pressure and the second Reynolds number, and saving measured value for the third mass flow.

3. The method as claimed in claim 2,

wherein the iteration ends if a value of a difference between successive measured values for the third mass flow or the second Reynolds number is below a limit value,
wherein the limit value is, for example 5%, and in particular 2%, and preferably 1% of an average value of the measured values which make up the difference, or one of the measured values which make up the difference.

4. The method as claimed in one of the preceding claims,
wherein the media state is checked using the Coriolis measuring device (10), wherein a damping of vibrations and/or a fluctuation of a resonant frequency of at least one measuring tube (11) of the Coriolis measuring device is used for said check.

5. The method as claimed in one of the preceding claims,
wherein a resonant frequency of at least one measuring tube (11) of the Coriolis measuring device (10) is used during the density measurement.

6. The method as claimed in claim 5,

wherein the calculation of the second media density is corrected using a physical-mathematical model if a gaseous component is detected, wherein the model takes account of a movement of gas bubbles relative to a measuring tube wall in one measuring tube direction of oscillation.

7. The method as claimed in one of the preceding claims,

wherein a second density of the medium is measured if a gaseous component is detected by the Coriolis measuring device (10),
wherein a ratio of a volume of the gaseous component to the liquid component is determined based on the first density and the second density,
wherein a measured value for a differential pressure measurement is corrected using said ratio.

8. The method as claimed in one of the preceding claims,

wherein the differential pressure measuring device (20) has a first pressure sensor (21.1) and a second pressure sensor (21.1), wherein the first pressure sensor is arranged upstream of the object that is obstructing the flow, and wherein the second pressure sensor is arranged downstream of the object that is obstructing the flow,
and/or wherein the differential pressure measuring device has a differential pressure sensor (22) which measures a differential pressure of an upstream-facing side of the object that is obstructing the flow and a downstream-facing side of the object that is obstructing the flow.

9. The method as claimed in one of the preceding claims,

    wherein an electronic measuring/operating circuit (12) of the Coriolis measuring device provides and outputs measured values for the mass flow,

    wherein if a purely liquid medium is detected, measured values for the first mass flow recorded using the Coriolis measuring device are output, and wherein if a gaseous component is detected in the medium, measured values for the third mass flow recorded using the differential pressure are output,

    wherein the electronic measuring/operating circuit is in particular arranged in a housing (13) of the Coriolis measuring device.

10. The method as claimed in one of the preceding claims,
    wherein an impact exerted by a static differential pressure on measured values for the differential pressure is corrected.

11. The method as claimed in one of the preceding claims,
    wherein if an absolute value for the differential pressure is below a limit value, a mass flow determined using the differential pressure is set to a value of zero, wherein the limit value is, for example, 20 mbar, and in particular 10 mbar, and preferably 5 mbar.

**Revendications**

1. Procédé (100) destiné à l'exploitation d'un point de mesure de débit (1) pour des produits comportant au moins une phase liquide, lequel point de mesure comprend :

    un débitmètre Coriolis (10) destiné à mesurer un débit massique et une densité d'un produit s'écoulant à travers une conduite (2), le débitmètre Coriolis présentant au moins un tube de mesure (11) avec respectivement une entrée (11.1) et une sortie (11.2) ;
    un dispositif de mesure de pression différentielle (20) étant conçu pour détecter une pression différentielle entre une zone d'écoulement (3.1) disposée en amont d'un obstacle à l'écoulement, notamment le débitmètre Coriolis, et une zone d'écoulement (3.2) disposée en aval de l'obstacle à l'écoulement,
le procédé comprenant les étapes suivantes :
Vérification d'un état de produit au moyen du débitmètre Coriolis (101) ;

    - En cas de détection d'un produit purement liquide :

        Mesure d'une première densité du produit au moyen du débitmètre Coriolis et mémorisation d'une valeur mesurée de la première densité (102.1) ;
        Mesure d'un premier débit massique au moyen du débitmètre Coriolis (102.2) ;
        Détermination d'une première viscosité du produit sur la base de la première densité, de la pression différentielle et du premier débit massique et mémorisation d'une valeur mesurée de la première viscosité (102.3),

    - En cas de détection d'une fraction gazeuse dans le produit

        Détermination d'un premier nombre de Reynolds du produit (103.1) au moyen

            - de la première viscosité ;
            - de la première densité et/ou d'une deuxième densité du produit mesurée au moyen du débitmètre Coriolis lors de la détection de la partie gazeuse ;
            - un deuxième débit massique mesuré au moyen du débitmètre Coriolis lors de la détection de la partie gazeuse,

        Détermination d'un troisième débit massique sur la base de la pression différentielle et du premier nombre de Reynolds (103.2).

2. Procédé selon la revendication 1,
    pour lequel les étapes de procédé itératives suivantes sont effectuées lors de la détection de la partie gazeuse :

        Détermination d'un deuxième nombre de Reynolds (104.1) au moyen

            - du troisième débit massique ;
            - de la première viscosité ;
            - de la première densité et/ou de la deuxième densité,

        et mémorisation d'une valeur mesurée du deuxième nombre de Reynolds,

Détermination d'un troisième débit massique (104.2) sur la base de la pression différentielle et du deuxième nombre de Reynolds et mémorisation d'une valeur mesurée du troisième débit massique.

3. Procédé selon la revendication 2,

pour lequel l'itération est terminée dès qu'une différence de valeurs mesurées successives du troisième débit massique ou du deuxième nombre de Reynolds est inférieure à une valeur limite,
la valeur limite étant par exemple de 5 %, et notamment de 2 % et de préférence de 1 %, d'une valeur moyenne des valeurs mesurées formant la différence ou d'une des valeurs mesurées formant la différence.

4. Procédé selon l'une des revendications précédentes,
pour lequel l'état du produit est contrôlé au moyen du débitmètre Coriolis (10), un amortissement des vibrations et/ou une fluctuation d'une fréquence de résonance d'au moins un tube de mesure (11) du débitmètre Coriolis étant utilisés lors du contrôle.

5. Procédé selon l'une des revendications précédentes,
pour lequel, lors de la mesure de la densité, on utilise une fréquence de résonance d'au moins un tube de mesure (11) du débitmètre Coriolis (10).

6. Procédé selon la revendication 5,

pour lequel, en cas de détection d'une fraction gazeuse, la détermination de la deuxième densité de produit est corrigée à l'aide d'un modèle physico-mathématique,
le modèle prenant en compte un mouvement de bulles de gaz par rapport à une paroi de tube de mesure dans une direction de vibration du tube de mesure.

7. Procédé selon l'une des revendications précédentes,

pour lequel, lors de la détection d'une partie gazeuse au moyen du débitmètre Coriolis (10), une deuxième densité du produit est mesurée,
un rapport entre un volume de la partie gazeuse et la partie liquide étant déterminé sur la base de la première densité et de la deuxième densité,
une valeur mesurée d'une pression différentielle étant corrigée au moyen du rapport.

8. Procédé selon l'une des revendications précédentes,

pour lequel le dispositif de mesure de pression différentielle (20) comprend un premier capteur de pression (21.1) et un deuxième capteur de pression (21.1), le premier capteur de pression étant disposé en amont de l'obstacle à l'écoulement et le deuxième capteur de pression étant disposé en aval de l'obstacle à l'écoulement, et/ou pour lequel le dispositif de mesure de pression différentielle comprend un capteur de pression différentielle (22), lequel détecte une pression différentielle d'un côté amont de l'obstacle à l'écoulement et d'un côté aval de l'obstacle à l'écoulement.

9. Procédé selon l'une des revendications précédentes,

pour lequel un circuit électronique de mesure/fonctionnement (12) du débitmètre Coriolis fournit et émet des valeurs mesurées du débit massique,
des valeurs mesurées du premier débit massique saisies étant émises lors de la détection d'un produit purement liquide au moyen du débitmètre Coriolis,
et, en cas de détection d'une partie gazeuse dans le produit, des valeurs mesurées du troisième débit massique saisies étant émises au moyen de la pression différentielle,
le circuit électronique de mesure/ fonctionnement étant disposé notamment dans un boîtier (13) du débitmètre Coriolis.

10. Procédé selon l'une des revendications précédentes,
pour lequel une influence d'une pression différentielle statique sur des valeurs mesurées de la pression différentielle est corrigée.

11. Procédé selon l'une des revendications précédentes,
pour lequel, si une valeur absolue de la pression différentielle est inférieure à une valeur limite, un débit massique déterminé au moyen de la pression différentielle est mis à une valeur nulle, la valeur limite étant par exemple de 20 mbar, et notamment de 10 mbar et de préférence de 5 mbar.

Fig. 1

Fig. 2

EP 4 078 096 B1

Fig. 3

100

101 - Überprüfen eines Medienzustands

102.1 - Messen einer ersten Dichte

102.2 - Messen eines ersten Durchflusses

102.3 - Bestimmen einer ersten Viskosität

103.1 - Bestimmen einer ersten Reynoldszahl

103.2 - Bestimmen eines dritten Durchflusses

104.1 - Bestimmen einer zweiten Reynoldszahl

104.2 - Bestimmen eines dritten Durchflusses

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005046319 A1
- GB 2572836 A